(19) Europäisches Patentamt

European Patent Office

Office européen des brevets

(11) **EP 1 710 554 A1**

(12) **EUROPÄISCHE PATENTANMELDUNG**

(43) Veröffentlichungstag:
**11.10.2006 Patentblatt 2006/41**

(51) Int Cl.:
***G01N 1/22*** *(2006.01)* ***G01N 33/00*** *(2006.01)*

(21) Anmeldenummer: 06006472.2

(22) Anmeldetag: **29.03.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **05.04.2005 DE 102005015652**

(71) Anmelder:
• **Fraunhofer-Gesellschaft zur Förderung der angewandten Forschung e.V. 80686 München (DE)**

• **Universität Stuttgart 70174 Stuttgart (DE)**

(72) Erfinder:
• **Mair, Stefan Dipl.-Ing. 83607 Holzkirchen (DE)**
• **Mayer, Florian Dr. 81539 München (DE)**
• **Breuer, Klaus Dr. 83229 Aschau (DE)**

(54) **Kleinprüfkammer zur humanolfaktorischen Charakterisierung von Materialien**

(57)    Die Erfindung betrifft eine Vorrichtung zur olfaktorischen Charakterisierung einer Probe, umfassend eine Prüfkammer, in die die Probe einführbar ist, ein Einlass für Neutralluft in die Prüfkammer, ein Auslass für die mit den von der Probe emittierten Geruchsstoffen beladenen Abluft, wobei der Auslass in eine Öffnung vorbestimmter Geometrie mündet, so dass ein Proband mit vorbestimmter Geometrie den Geruchseindruck der Abluft feststellen kann. Dabei ist durch eine geeignete Auslegung von Einlass und Prüfkammer gewährleistet, dass einströmende Luft die Probe möglichst vollständig umströmt. Die Erfindung betrifft ebenso ein zugehöriges Verfahren

Bild 2

**Beschreibung**

Die Erfindung betrifft eine Messanordnung zur humanolfaktorischen Charakterisierung von Materialien

Aus dem Stand der Technik ist es bekannt, das Geruchsverhalten von Substanzen humanolfaktorisch zu bestimmen. Unter humanolfaktorischer Bestimmung wird im Rahmen dieser Anmeldung wie fachüblich verstanden, dass der Geruchseindruck von mindestens einem Probanden als Maß für den Geruch einer Substanz verwendet wird.

Dabei ist es bekannt, dass bestimmte Bereiche, in denen die Auswirkungen geruchsbelastender Substanzen bestimmt werden soll, von Probanden begangen werden. Die Probanden geben dann ihren Geruchseindruck wieder. Nachteilig daran ist, dass damit ein Gesamteindruck des Geruchs ermittelt wird. Der Einfluss einzelner Substanzen auf den Geruch ist somit nicht feststellbar.

Eine Alternative ist es, einzelne Substanzen direkt zu untersuchen. Dazu wird die zu untersuchende Substanz direkt von den Probanden berochen. Dabei besteht allerdings das Problem, dass die Messgeometrie schwer reproduzierbar ist. Hinzu kommt, dass auch geringe Luftströmungen der Umgebung, wie sie auch durch die Probanden selbst verursacht werden können, den Geruchseindruck ändern, da die Konzentration der Geruchsstoffe verändert wird. Daher stellen unterschiedliche Probanden auch im Falle einer übereinstimmenden Geruchsempfindlichkeit unterschiedliche Geruchsbelastung fest.

Es wird, insbesondere im Bereich der Automobilindustrie der Ansatz verfolgt, die Probe in ein geschlossenes Behältnis zu geben und, dieses zu beheizen. Anschließend wird das Behältnis geöffnet und mehrere Probanden riechen an der austretenden Luft. Aufgrund der begrenzten Größe des Verschlusses des Behältnisses können mehrere Probanden nur hintereinander riechen. Da aber ab Öffnen des Verschlusses die Durchmischung mit der Umgebungsluft einsetzt, ist für die einzelnen Probanden der Geruchseindruck auch bei gleicher Geruchsempfindlichkeit unterschiedlich.

Aus der US 5,313,821 ist es bekannt landwirtschaftliche Produkte, insbesondere Getreide, zu untersuchen, indem die landwirtschaftlichen Produkte in eine Prüfkammer gegeben werden. In der Prüfkammer durchströmt Luft die landwirtschaftlichen Produkte. Der Geruchseindruck der Luft wird nach der Durchströmung untersucht. Dieses Verfahren eignet sich zur Untersuchung landwirtschaftlicher Produkte, gibt aber nicht deren Geruchseindruck unter Realbedingungen wieder, da normalerweise Luft etwa durch Getreide nicht durchströmt, sondern daran vorbeiströmt.

Aus der US 3,902,851 ist eine Vorrichtung bekannt, mit der Geruchseindruck von Luft, welche sich in einem flexiblen Behälter befindet von einer Versuchsperson untersuch werden kann. Hierfür sind Einrichtungen vorgesehen, die Luft geeignet zu verdünnen.

Aus der US 4,411,156 ist ein Aufbau bekannt, bei der Luft von einer Zelle, in der sich Katzenstreu befindet, in eine Nachbarzelle gepumpt wird, in der sich eine Versuchsperson aufhält, welche den Geruchseindruck in der Nachbarzelle ermitteln kann.

Aufgabe der vorliegenden Erfindung ist es, eine Vorrichtung zu schaffen, die eine Möglichkeit gibt, mit der die Geruchsbelastung von Substanzen mit höherer Objektivität festgestellt werden kann. Ebenso ist es Aufgabe der vorliegenden Erfindung ein entsprechendes Verfahren bereitzustellen. Die Lösung der Aufgabe ist in den unabhängigen Ansprüchen angegeben. Vorteilhafte Weiterbildungen finden sich in den Unteransprüchen.

Die erfindungsgemäße Vorrichtung weist eine Prüfkammer auf, in die die Probe einführbar ist, einen Einlass für Neutralluft in die Prüfkammer und einen Auslass für die mit den von der Probe emittierten Geruchsstoffen beladenen Abluft. Dabei mündet der Auslass in eine Öffnung vorbestimmter Geometrie, so dass ein Proband mit vorbestimmter Geometrie den Geruchseindruck der Abluft feststellen kann. Es versteht sich, dass unter dem Begriff Neutralluft Luft oder ein Gas zu verstehen ist, welches den Geruchseindruck nicht verändert. Eine derartige Anordnung hat den Vorteil, dass ein stationärer Zustand der Durchströmung der Prüfkammer abgewartet werden kann. Dabei stellt sich nach kurzer Zeit ein Zustand ein, bei dem eine konstante Rate an Geruchsstoffen der durchströmenden Neutralluft von der Probe zugeführt werden kann. Zusammen mit der vorbestimmten und damit definierte Geometrie der Öffnung ergibt sich die Möglichkeit dass derselbe Proband oder mehrere Probanden definierte Bedingungen vorfinden. Es ist selbstverständlich, dass bei einer extrem langen Messung die Geruchsstoffe in der Probe ausgasen und sich daher das Geruchsverhalten der Probe ändern kann. Derart lange Messungen werden aber schon aus Praktikabilitätsgründen nicht durchgeführt. Durch eine möglichst vollständige Umströmung der Probe wird eine erhöhte und gleichmäßige Abgabe der Geruchsstoffe von der Probe an die durchströmende Luft erreicht. Dies kann durch einen Ventilator verbessert werden.

Die Öffnung als Trichter mit einem Öffnungswinkel von 8° auszulegen hat sich in der Praxis als für die Probanden angenehm erwiesen.

Ebenso hat es sich gezeigt, dass ein Trichter, dessen Größe sich nach folgender Formel berechnet, für günstige Messbedingungen sorgt :

$$D = 8 \bullet \sqrt{VS/3,2}$$

Dabei ist D der Durchmesser des Trichters in cm und VS der durchströmende Volumenstrom in $m^3$/h.

Mit einer temperierbaren Kammer kann eine gleichmäßige Abgabe von Geruchsstoffen aus der Probe an die durchströmende Luft erreicht werden. Durch Einstellen einer erhöhten Temperatur ist auch eine erhöhte Abgabe von Geruchsstoffen möglich, welche die Empfindlichkeit der humanolfaktorischen Charakterisierung steigert.

Durch Vorsehen einer weiteren Öffnung für Neutralluft als Referenzöffnung kann erreicht werden, dass der Proband durch Vergleich mit Neutralluft einen genaueren Geruchseindruck hat. Insbesondere kann die Gewöhnung an Geruchsstoffe, die zu einer Senkung des Geruchsempfindens führt, vermieden werden.

Die Vergleichbarkeit mit der Abluft uns angenehme Bedingungen für den Probanden sind vor allem dann gewährleistet, wenn die Referenzöffnung mit der Öffnung für Abluft in Größe und Geometrie übereinstimmt.

Ein einfacher Aufbau wird erreicht wenn die Neutralluft für die Referenzöffnung und die Neutralluft für die Probenkammer eine gemeinsame Quelle haben. Sollte die Neutralluft entgegen der Anforderung doch Geruchsstoffe enthalten, würde ein Proband in einem günstigen Fall den Geruchsunterschied zwischen der Neutralluft und der Abluft feststellen können und somit die Probe hinsichtlich ihrer Geruchseigenschaften dennoch korrekt charakterisieren.

Da das Geruchsempfinden von der Feuchtigkeit abhängen kann, ist eine Befeuchtung der Neutralluft sinnvoll.

Eine besonders gut von Geruchsstoffen befreite Neutralluft wird durch einen Aktivkohlefilter erreicht.

Die Einzelheiten werden anhand nachfolgender Beschreibung anhand der Zeichnungen näher erläutert.

Dabei zeigen

Bild 1 eine schematische Darstellung einer dynamischen Prüfkammer zur humanolfaktorischen Charakterisierung von Materialien; Einolfaktometersystem

Bild 2 eine mögliche Anordnung einer dynamischen Prüfkammer zur humanolfaktorischen Charakterisierung von Materialien; Zweiolfaktometersystem

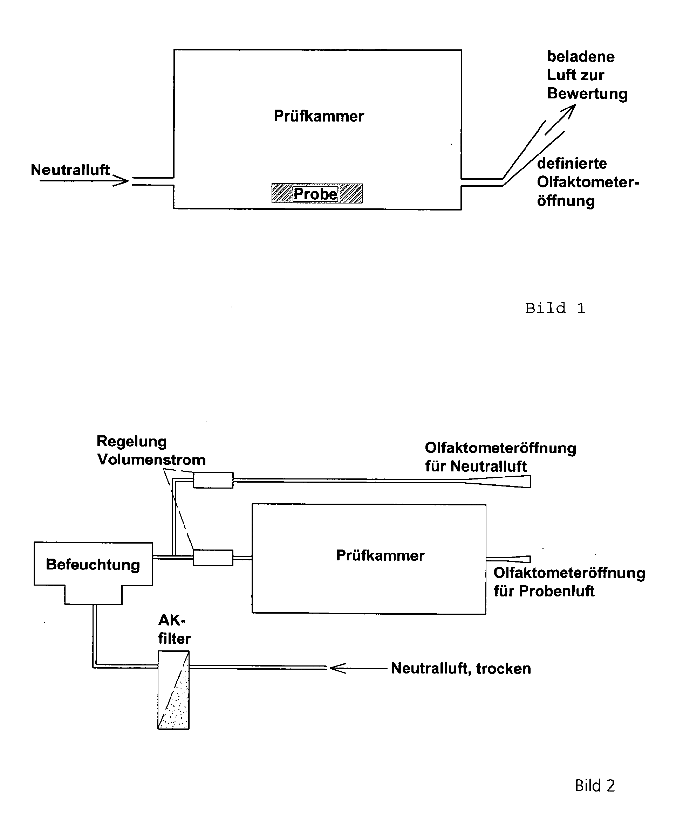

Zur Ermittlung des Geruchsverhaltens wird eine dynamisch betriebene Prüfkammer mit einem Einolfaktometer- oder Zweiolfaktometersystem gekoppelt. Die Probenaufbewahrung erfolgt in einer Prüfkammer mit variablem Volumen. Die Prüfkammer wird konstant mit einem Neutralluftstrom durchflossen. Dabei werden die, aus der Probe austretenden geruchsaktiven Substanzen in den Neutralluftstrom aufgenommen. Beim Verlassen der Prüfkammer wird die nun mit Geruchsstoffen beladene Luft hinsichtlich ihres Geruchsverhaltens bewertet. Aufgrund des dynamischen Versuchsprinzips stellt sich nach einer, vom Luftwechsel der Kammer und dem Emissionsmassenstrom der Geruchsstoffe aus der Probe abhängigen Zeit, ein Gleichgewicht der Geruchsstoffkonzentration in der Prüfkammer und somit der Prüfkammerabluft ein. Das Arbeitsprinzip ist in Bild 1 schematisch dargestellt.

Allgemeine Anforderungen an die Prüfkammer und die Kammerperipherie

Geräte und Leitungen, die mit Probenluft oder Neutralluft in Kontakt kommen müssen folgende Eigenschaften bestmöglich erfüllen:

Sie dürfen die Probenluft nicht olfaktorisch beeinflussen.

Die Oberflächen dürfen nicht mit Probeninhaltsstoffen reagieren

• Die Oberflächen dürfen Reaktionen der Probeninhaltsstoffe untereinander nicht fördern (Katalyse)
• Es dürfen keine Speicher- oder Diffusionsvorgänge stattfinden
• Sie müssen hinreichend temperaturstabil sein (bis 200 °C)

Aufgrund der gestellten Anforderungen, sind z.B. Glas und Edelstahl als Material für größere Flächen und Leitungen zu wählen. Für Kleinteile, etwa Dichtungen können auch andere Materialien, wie PTFE, FEP, PET oder PVF eingesetzt werden.

Luftversorgung

Zur Versorgung der Prüfkammer ist Neutralluft mit ausreichendem Vordruck bereitzustellen. Diese kann aus Druckluftflaschen entnommen werden, oder durch Kompressoren vor Ort erzeugt werden. In jedem Fall ist die Geruchsneutralität der Luft zu gewährleisten. Die zugeführte Neutralluft kann nach Bedarf aufgereinigt und befeuchtet werden.

Prüfkammer

Zur Aufbewahrung der Probe kommt eine Kammer mit definiertem Rauminhalt zum Einsatz. Sie ist aus geeignetem, inertem Material, z.B. elektropoliertem Edelstahl zu erstellen. Zur Einbringung der Probe ist eine ausreichend große Öffnung vorzusehen, die nach Beladung der Kammer luftdicht verschließbar sein muss.

Die Prüfkammer kann temperierbar sein, was auch über die Temperatur der umgebenden Luft realisiert werden kann. Es sind min. zwei Anschlüsse erforderlich, der Lufteinlass und der Luftauslass. Die Luftführung ist so zu realisieren, dass die durch das Probegefäß einströmende Luft die Probe möglichst vollständig umströmt, bevor sie durch den Luftauslass entweicht. Zur zusätzlichen Verwirbelung der Kammerluft kann ein Ventilator an der Kammerrückwand installiert werden. Am Luftauslass ist zur Bewertung der Geruchsprobe eine Olfaktometeröffnung angebracht, deren Abmaße und Form dem Probenluftvolumenstrom angepasst werden. Als Öffnung kann ein Trichter verwendet werden, dessen Geometrie im Folgenden beispielhaft beschrieben ist. Er weist einen Öffnungswinkel von 8 ° auf. Der Durchmesser der Auslassöffnung des Olfaktometers kann nach Gleichung 1 aus dem Probenluftstrom berechnet werden.

$$D = 8 \cdot \sqrt{\frac{VS}{3,2}} \qquad (1)$$

D     Durchmesser Luftauslass Trichter [cm]
VS    Volumenstrom [m³/h]

<u>Weiteres</u>

Zur Erhöhung der Reproduzierbarkeit olfaktorischer Messungen ist zu berücksichtigen, dass die menschliche Nase auch auf Änderungen der Feuchte und der Temperatur reagiert. Der Kontrolle der dem Probanden vor der Bewertung zugeführten Luft ist somit erhöhte Aufmerksamkeit zu widmen. Dies kann durch Verabreichung von Neutralluft direkt vor der Bewertung geschehen. Hierzu werden Prüfkammern im Zweiolfaktometersystem eingesetzt. Zur Darbietung von Neutralluft kann ein Trichter verwendet werden (8° Öffnungswinkel, 8 cm Durchmesser der Luftaustrittsöffnung) durch welchen ein Volumenstrom von 3,2 m³/h Neutralluft fließt. I.d.R. wird die Luft, welche zum Durchströmen des Probegefäßes verwendet wird auch zur Speisung der Neutralluftversorgung verwendet werden. Zu beachten ist, dass Neutralluft und Probenluft die gleiche Temperatur und relative Feuchte aufweisen, wobei die Neutralluft geruchlich nicht belastet sein darf. Eine mögliche Anordnung der Anlagenkomponenten ist in Bild 2 dargestellt

**Patentansprüche**

1. Vorrichtung zur olfaktorischen Charakterisierung einer Probe, umfassend eine Prüfkammer, in die die Probe einführbar ist, mit einem Einlass in die Prüfkammer für Neutralluft und einem Auslass aus der Prüfkammer für die mit den von der Probe emittierten Geruchsstoffen beladenen Abluft, wobei der Auslass in eine Öffnung vorbestimmter Geometrie mündet, die so ausgebildet ist, dass ein Proband den Geruchseindruck der Abluft feststellen kann, **dadurch gekennzeichnet, dass** durch eine geeignete Auslegung von Einlass und Prüfkammer einströmende Luft die Probe möglichst vollständig umströmt.

2. Vorrichtung nach Anspruch 1, **dadurch gekennzeichnet, dass** die Öffnung ein Trichter mit einem Öffnungswinkel von 8° ist

3. Vorrichtung nach einem der Ansprüche 1 oder 2, **da-**

**durch gekennzeichnet, dass** der Durchmesser des Trichters nach folgender Formel berechnet ist

$$D = 8 \bullet \sqrt{VS/3,2}$$

wobei D der Durchmesser des Trichters in cm und VS der Volumenstrom in m³/h gegeben ist

4. Vorrichtung nach einem der Ansprüche 1 bis 3, **dadurch gekennzeichnet, dass** die Prüfkammer temperierbar ist.

5. Vorrichtung nach einem der Ansprüche 1 bis 4, **dadurch gekennzeichnet, dass** zur Verwirbelung der Luft ein Ventilator, insbesondere ein an der Prüfkammerrückwand angeordneter Ventilator, vorgesehen ist.

6. Vorrichtung nach einem der Ansprüche 1 bis 5, **dadurch gekennzeichnet, dass** eine weitere Öffnung als Referenzöffnung für Neutralluft vorgesehen ist.

7. Vorrichtung nach Anspruch 6, **dadurch gekennzeichnet, dass** die weitere Öffnung dieselbe Geometrie und Größe aufweist wie die Öffnung für die Abluft.

8. Vorrichtung nach einem der Ansprüche 6 bis 7, **dadurch gekennzeichnet, dass** zur Zuführung der Neutralluft in die Prüfkammer und zur Zufuhr der Neutralluft in die Referenzöffnung eine gemeinsame Neutralluftquelle vorgesehen ist.

9. Vorrichtung nach einem der Ansprüche 1 bis 8, **dadurch gekennzeichnet, dass** eine Befeuchtungseinheit zur Befeuchtung der Neutralluft vorhanden ist.

10. Vorrichtung nach einem der Ansprüche 1 bis 9, **dadurch gekennzeichnet, dass** die zuzuführende Luft durch einen Aktivkohlefilter zuführbar ist

11. Verfahren zur olfaktorischen Charakterisierung von Materialien, welches die folgenden Schritte enthält:

    • Einführen einer Probe in eine Prüfkammer
    • Pumpen von Neutralluft in die Prüfkammer
    • möglichst vollständige Umströmung der Probe
    • Führen der mit den von der Probe emittierten Geruchsstoffen beladenen Abluft zu einer Öffnung, an welcher ein Proband eine Geruchsprüfung vornehmen kann
    • Abwarten eines stationären Strömungszustands
    • Ermittlung des Geruchseindrucks durch einen

oder mehrere Probanden

beladene
Luft zur
Bewertung

Prüfkammer

Neutralluft

Probe

definierte
Olfaktometeröffnung

Bild 1

Regelung
Volumenstrom

Olfaktometeröffnung
für Neutralluft

Befeuchtung

Prüfkammer

Olfaktometeröffnung
für Probenluft

AK-
filter

Neutralluft, trocken

Bild 2

**Europäisches Patentamt**

# EUROPÄISCHER RECHERCHENBERICHT

Nummer der Anmeldung

EP 06 00 6472

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 767 385 A (BUNDY ET AL) 16. Juni 1998 (1998-06-16) * Spalte 3, Zeile 40 - Spalte 4, Zeile 51 * * Spalte 9, Zeile 10 - Zeile 17 * * Abbildungen 1-4 * | 1-11 | INV. G01N1/22 G01N33/00 |
| D,X | US 5 313 821 A (BETT ET AL) 24. Mai 1994 (1994-05-24) * Abbildung 4 * | 1 | |
| A | EP 1 359 403 A (JAPAN TOBACCO INC) 5. November 2003 (2003-11-05) * Absatz [0013] - Absatz [0016] * * Abbildungen 1,3 * | 1-11 | |
| A | EP 0 239 233 A (WAKABAYASHI SHOTEN KK; WAKABAYASHI + CO) 30. September 1987 (1987-09-30) * Abbildungen 1A-3 * | 1-11 | |
| A | LAWRECE C C KOE, JURN WEI CHAI: "Development of the Odormat for Sewage Odour Measurement" BOOKLET OF JAPANESE MINISTRY OF ENVIRONMENT: ODOR MEASUREMENT REVIEW, [Online] September 2003 (2003-09), Seiten 128-133, XP002388909 Gefunden im Internet: URL:www.env.go.jp/en/air/odor/measure/02_3 _3.pdf> [gefunden am 2006-07-05] * das ganze Dokument * | 1-11 | **RECHERCHIERTE SACHGEBIETE (IPC)** G01N |
| A | US 6 018 984 A (MCGINLEY ET AL) 1. Februar 2000 (2000-02-01) * das ganze Dokument * | 1-11 | |

-/--

Der vorliegende Recherchenbericht wurde für alle Patentansprüche erstellt

| Recherchenort | Abschlußdatum der Recherche | Prüfer |
|---|---|---|
| München | 6. Juli 2006 | Timonen, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................................................
& : Mitglied der gleichen Patentfamilie, übereinstimmendes Dokument

EPO FORM 1503 03.82 (P04C03)

**Europäisches Patentamt**

## EUROPÄISCHER RECHERCHENBERICHT

**Nummer der Anmeldung**

EP 06 00 6472

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | FR 2 212 938 A (INSTITUT NAL RECHER CHIMIQUE APP,FR) 26. Juli 1974 (1974-07-26) * das ganze Dokument * ----- | 1-11 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 6. Juli 2006 | Timonen, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 00 6472

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-07-2006

| Im Recherchenbericht angeführtes Patentdokument | | Datum der Veröffentlichung | Mitglied(er) der Patentfamilie | | Datum der Veröffentlichung |
|---|---|---|---|---|---|
| US 5767385 | A | 16-06-1998 | KEINE | | |
| US 5313821 | A | 24-05-1994 | KEINE | | |
| EP 1359403 | A | 05-11-2003 | CA | 2437210 A1 | 15-08-2002 |
| | | | CN | 1491352 A | 21-04-2004 |
| | | | WO | 02063275 A1 | 15-08-2002 |
| | | | JP | 3416121 B2 | 16-06-2003 |
| | | | JP | 2002236079 A | 23-08-2002 |
| | | | US | 2004182180 A1 | 23-09-2004 |
| EP 0239233 | A | 30-09-1987 | DE | 3769344 D1 | 23-05-1991 |
| | | | KR | 9707069 B1 | 02-05-1997 |
| | | | US | 4770027 A | 13-09-1988 |
| US 6018984 | A | 01-02-2000 | KEINE | | |
| FR 2212938 | A | 26-07-1974 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5313821 A
- US 3902851 A
- US 4411156 A